# FASCICULE DE BREVET EUROPEEN

(11) **EP 3 999 323 B1**
(45) Date de publication et mention de la délivrance du brevet: **25.06.2025**
(21) Numéro de dépôt: 20751614.7
(22) Date de dépôt: 15.07.2020
(51) Int. Cl.: B29C 65/06, B29C 65/82, B62D 35/00, B60R 13/04, B29K 23/00, B29L 31/30

(54) **PIÈCE EN MATIÈRE PLASTIQUE MISE EN OEUVRE LORS DE LA FABRICATION D'UN BECQUET D'UN VÉHICULE AUTOMOBILE**
KUNSTSTOFFTEIL ZUR HERSTELLUNG EINES KRAFTFAHRZEUG-SPOILERS
PLASTIC PART USED IN THE MANUFACTURE OF A MOTOR VEHICLE SPOILER

(30) Priorité: 19.07.2019 FR 1908187
(43) Date de publication de la demande: 25.05.2022
(73) Titulaire: NOVARES France, 78140 Vélizy-Villacoublay (FR)
(72) Inventeur: CHENAUD, David, 01100 BELLIGNAT (FR); FALLER, Jean François, 62300 LENS (FR); BERTONI, Jean-Marc, 88230 FRAIZE (FR)
(74) Mandataire: Germain Maureau
(86) Numéro de dépôt international: PCT/FR2020/051271
(87) Numéro de publication internationale: WO 2021/014073

(56) Documents cités:
- JP-A- 2011 016 495
- JP-A- 2011 131 445
- JP-A- 2015 067 086

## Description

La présente invention concerne une pièce en matière plastique mise en œuvre lors de la fabrication d'un becquet ou d'une baguette de porte d'un véhicule automobile.

L'invention concerne également un becquet ou une baguette de porte de véhicule automobile formé par l'assemblage d'une telle première pièce en matière plastique et d'une deuxième pièce en matière plastique, l'assemblage étant réalisé par un procédé de soudage par vibration.

L'invention concerne également un procédé de fabrication d'un becquet ou d'une baguette de porte d'un véhicule automobile.

Les véhicules automobiles actuels sont généralement équipés d'un élément de carrosserie de type becquet rapporté au-dessus du hayon du véhicule et destiné à améliorer les performances aérodynamiques et l'esthétique du véhicule.

En vue de diminuer leur coût de fabrication et leur poids, ces becquets sont de plus en plus souvent constitués de matériaux thermoplastiques, en particulier en polypropylène contenant entre 20 % et 30 % de charges minérales. Ils sont formés en général par l'assemblage d'une peau supérieure et d'une doublure inférieure. Cet assemblage peut être réalisé par collage, par soudage par ultrason, ou plus récemment par soudage par vibration. Les procédés par collage et par soudage par ultrason étant plus complexes et plus longs à mettre en œuvre, le procédé par soudage par vibration est actuellement privilégié. Ce procédé consiste notamment à mettre en contact la peau du becquet avec la doublure du becquet au niveau d'une ou plusieurs zones de contact, puis à les faire se frotter dans un plan de joint en créant un mouvement alternatif d'une pièce sur l'autre dans le sens de la longueur de la pièce, tout en les maintenant sous pression. Dans la ou les zones de contact, un échauffement s'opère qui produit une fonte de la matière lorsque la température dépasse la température de fusion du ou des matériaux constitutifs de la peau et/ou de la doublure. Les deux pièces vont ensuite se rapprocher progressivement jusqu'à l'obtention de l'assemblage final. Les vibrations s'arrêtent et l'interface de liaison entre la peau et la doublure se solidifie peu à peu au fur et à mesure de son refroidissement. Un procédé de fabrication d'un becquet mettant en œuvre un procédé de soudage par vibration a notamment été décrit dans les documents JP 2011 131445 A, JP 2011 016495 A et JP 2015 067086 A.

Ce procédé de soudage par vibration peut toutefois présenter plusieurs inconvénients. L'un des inconvénients est l'apparition possible de bosses et de déformations sur la peau du becquet à l'endroit où la peau et la doublure sont en contact. Un autre inconvénient est la faible tenue en arrachement de l'assemblage formé, notamment dans le cas où le matériau constitutif de la peau et de la doublure est à base de polypropylène avec un taux de charges de 20 à 30 %. En effet, la présence de charges diminue la quantité de matière thermoplastique soudée, et, par conséquent, la résistance mécanique de la soudure. Par ailleurs, lors du frottement des deux pièces, de la poussière, générée du fait de la présence de charges minérales dans le matériau constitutif du becquet, ou des résidus de soudure peuvent se déposer sur la peau du becquet, ce qui peut gêner ensuite une opération postérieure de peinture de ladite peau. Ces particules gênantes peuvent être présentes dans des zones peu accessibles du becquet et être ensuite libérées lors du processus de peinture. Ces particules peuvent ainsi générer des défauts de type grain à la surface de la peau du becquet lors de la mise en peinture.

Les mêmes problématiques se posent également pour la fabrication des baguettes de porte d'un véhicule automobile.

L'invention vise donc à résoudre les problèmes susmentionnés.

A cet effet, l'invention a pour objet une pièce en matière plastique mise en œuvre lors de la fabrication d'un becquet ou d'une baguette de porte d'un véhicule automobile, ladite pièce comprenant au moins une paroi destinée à être soudée par vibration à une autre pièce constitutive du becquet ou de la baguette de porte, caractérisée en ce que ladite paroi est équipée d'au moins un réseau de picots en relief destinés à former une zone de soudure, lesdits picots possédant une forme sensiblement identique, constituée d'une base cylindrique et d'une extrémité conique, ledit réseau comprenant une pluralité de lignes de picots s'étendant selon une première direction, les picots de deux lignes adjacentes étant disposés en quinconce, et en ce que les picots sont répartis uniformément dans le réseau, la densité surfacique des picots dans le réseau étant comprise entre 0,08 picots/mm2 et 0,12 picots/mm2, et, de préférence, comprise entre 0,10 picots/mm2 et 0,11 picots/mm2.

Ainsi configurée, la pièce en matière plastique pourra être soudée par vibration à une autre partie constitutive d'un becquet ou d'une baguette de porte par l'intermédiaire des picots en relief formés sur une de ses parois. La répartition spécifique des picots en relief est par ailleurs configurée pour améliorer les résistances en arrachement et en pelage du becquet ou de la baguette de porte ainsi formé.

La pièce de l'invention pourra également comprendre une ou plusieurs des caractéristiques suivantes :
- les picots sont espacés de manière régulière dans chacune des lignes, l'écart entre deux picots adjacents dans chacune des lignes étant sensiblement égal au double du diamètre de la base cylindrique d'un picot, l'écart étant mesuré entre les sommets des extrémités coniques desdits picots adjacents.
- les lignes sont espacées de manière régulière selon une deuxième direction perpendiculaire à la première direction, l'écart entre deux lignes adjacentes étant sensiblement égal au diamètre de la base cylindrique d'un picot, l'écart étant mesuré entre les droites joignant les sommets des extrémités coniques des picots desdites lignes adjacentes.
- les picots possèdent une hauteur totale sensiblement égale au diamètre de leur base cylindrique.
- deux picots adjacents d'une des lignes définissent, avec le picot le plus proche d'une ligne adjacente, une structure triangulaire, dans laquelle l'angle formé entre les droites joignant respectivement les sommets des extrémités coniques desdits picots adjacents au sommet de l'extrémité conique dudit picot le plus proche est compris entre 80° et 100°, et, de préférence, est égal à 90°.
- l'angle au sommet de l'extrémité conique des picots est compris entre 100° et 135°, et, de préférence, est compris entre 115° et 120°, et, de préférence encore, est égal à 118°.
- le diamètre de la base cylindrique des picots est compris entre 1,70 mm et 2,70 mm, et, de préférence, est compris entre 2,10 mm et 2,30 mm, et, de préférence encore, est égal à 2,20 mm.
- le réseau comprend entre 2 et 5 lignes de picots.

L'invention concerne également un becquet ou une baguette de porte de véhicule automobile formé par l'assemblage d'une première pièce en matière plastique telle que décrite ci-dessus et d'une deuxième pièce en matière plastique, l'assemblage étant réalisé par un procédé de soudage par vibration, ledit becquet comprenant au moins une interface de liaison entre la première pièce et la deuxième pièce, caractérisé en ce que l'interface de liaison est formée d'un réseau de plots de forme sensiblement cylindrique, ledit réseau comprenant une pluralité de lignes de plots s'étendant selon une première direction, les plots de deux lignes adjacentes étant disposés en quinconce, en ce que les plots sont répartis uniformément dans le réseau, la densité surfacique des plots dans le réseau étant comprise entre 0,08 plot/mm2 et 0,12 plot/mm2, et, de préférence, comprise entre 0,10 plot/mm2 et 0,11 plot/mm2, et en ce que les plots possèdent une hauteur, telle que mesurée dans une direction parallèle à l'axe des plots, comprise entre 0,85 mm et 1,15 mm, et, de préférence, comprise entre 0,9 mm et 1,10 mm, et, de préférence encore, égale à 1,0 mm.

Le becquet ou la baguette de porte de l'invention pourra également comprendre une ou plusieurs des caractéristiques suivantes :
- le volume séparant les plots contient une structure filamentaire formée lors du procédé de soudage par vibration, le rapport entre le volume occupé par la structure filamentaire et le volume total disponible entre les plots est compris entre 0,35 et 0,45.
- les plots sont espacés de manière régulière dans chacune des lignes, l'écart entre deux plots adjacents dans chacune des lignes étant sensiblement égal au double du diamètre d'un plot, l'écart étant mesuré entre les axes desdits plots adjacents.
- les lignes sont espacées de manière régulière selon une deuxième direction perpendiculaire à la première direction, l'écart entre deux lignes adjacentes étant sensiblement égal au diamètre d'un plot, l'écart étant mesuré entre les droites joignant les axes des plots desdites lignes adjacentes.
- deux plots adjacents d'une des lignes définissent, avec le plot le plus proche d'une ligne adjacente, une structure triangulaire, dans laquelle l'angle formé entre les droites joignant respectivement les axes desdits plots adjacents à l'axe dudit plot le plus proche est compris entre 80° et 100°, et, de préférence, est égal à 90°.
- le diamètre des plots est compris entre 1,70 mm et 2,70 mm, et, de préférence, est compris entre 2,10 mm et 2,30 mm, et, de préférence encore, est égal à 2,20 mm.
- le réseau comprend entre 2 et 5 lignes de plots.
- la première pièce forme un élément de structure interne et la deuxième pièce forme un élément de structure externe destiné à être visible depuis l'extérieur du véhicule automobile.
- la première pièce et la deuxième pièce sont constitués d'un matériau du type polypropylène contenant entre 20 % et 30 % de charges minérales.

L'invention concerne également un procédé de fabrication d'un becquet ou d'une baguette de porte d'un véhicule automobile, comprenant les étapes suivantes :
- Fourniture d'une première pièce en matière plastique telle que décrite ci-dessus;
- Fourniture d'une deuxième pièce en matière plastique ;
- Mise en contact des première et deuxième pièces au niveau d'une ou plusieurs zones de soudure définies par un ou plusieurs réseaux de picots en relief de la première pièce;
- Déplacement relatif de la première pièce par rapport à la deuxième pièce, tout en maintenant lesdites pièces sous pression.

D'autres caractéristiques et avantages ressortiront clairement de la description ci-après d'un mode particulier de réalisation de l'invention, donné à titre d'exemple non limitatif, en référence aux dessins annexés dans lesquels :
[Fig. 1] est une vue en perspective d'un becquet selon l'invention ;
[Fig. 2] est une vue en perspective de la doublure du becquet représenté sur la figure 1 ;
[Fig. 3] est une vue en coupe transversale selon le plan de coupe III-III représenté sur la figure 1 ;
[Fig. 4] est une vue de face, agrandie d'une zone de soudure formée sur la doublure de la figure 2 ;
[Fig. 5] est une vue en coupe transversale selon le plan de coupe V-V représenté sur la figure 1 ;
[Fig. 6] est un diagramme illustrant l'évolution du taux volumique de la structure filamentaire dans l'espace disponible entre les plots dans les zones soudées du becquet en fonction de la densité surfacique des plots et, ce, pour plusieurs valeurs de hauteur desdits plots.

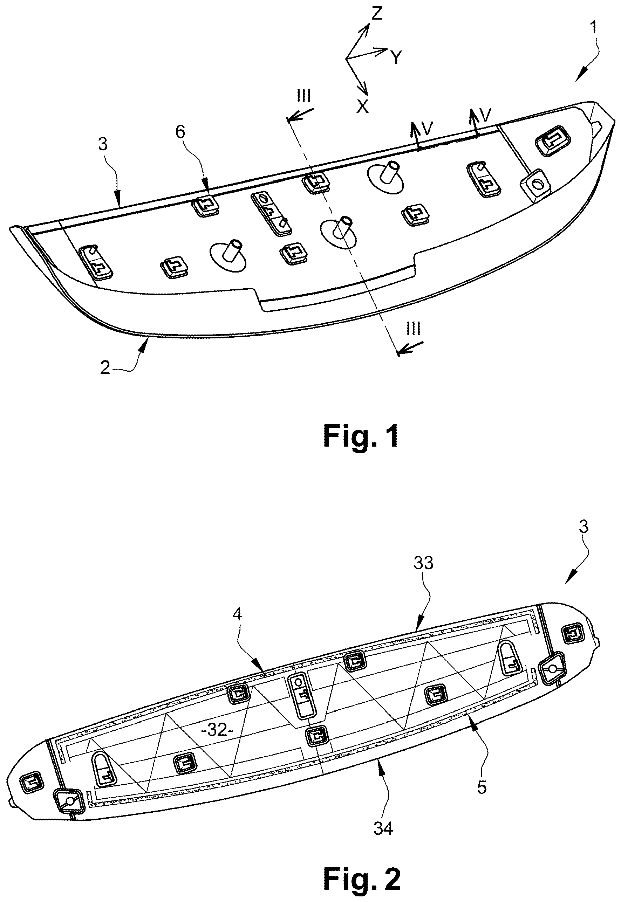

Dans la suite de cette description, et en référence au repère cartésien XYZ représenté sur la figure 1, il sera utilisé les termes de « direction longitudinale » pour une direction selon l'axe X, de « direction transversale » pour une direction selon l'axe Y et de « direction verticale » pour une direction selon l'axe Z. Par ailleurs, par convention, le terme « avant » sera utilisé pour indiquer une orientation dirigée vers l'avant du véhicule et le terme « arrière » sera utilisé pour indiquer une orientation dirigée vers l'arrière du véhicule.

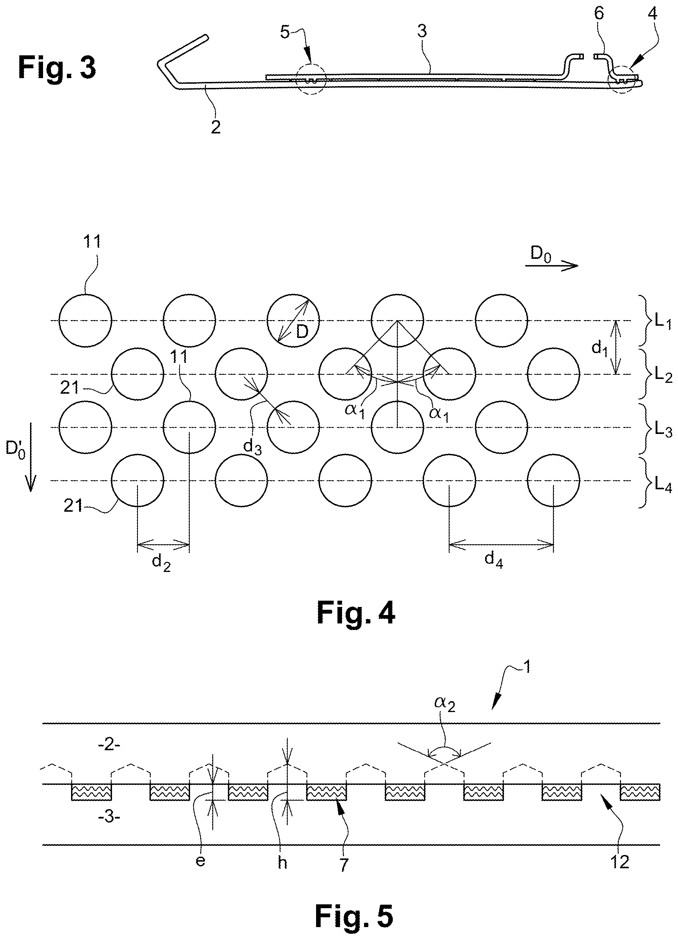

En référence à la figure 1, il est représenté un becquet 1 en forme d'aile configuré pour être fixé sur le hayon d'un véhicule automobile, au-dessus de la lunette arrière. Comme représenté sur les figures 1 et 3, le becquet 1 comprend un élément externe 2 destiné à être visible de l'extérieur et un élément interne 3 supportant ledit élément externe 2. L'élément interne 3, sensiblement plan, possède une face visible 31 destinée à faire face au pavillon du véhicule et à être connectée à celui-ci au moyen de brides 6. La face 32 de l'élément interne 3, qui est opposée à la face 31, est représentée sur la figure 2. Elle possède une première zone de soudure 4 le long du bord avant 33 de l'élément interne 3 destiné à être adjacent au pavillon du véhicule, et une deuxième zone de soudure 5 le long du bord arrière 34 de l'élément interne 3 destiné à être adjacent au troisième feu stop du véhicule. Ces première et deuxième zones de soudure 4, 5 sont destinées à être mises en contact avec une face correspondante de l'élément externe 2 lors de l'assemblage de l'élément externe 2 et de l'élément interne 3 par un procédé de soudage par vibration.

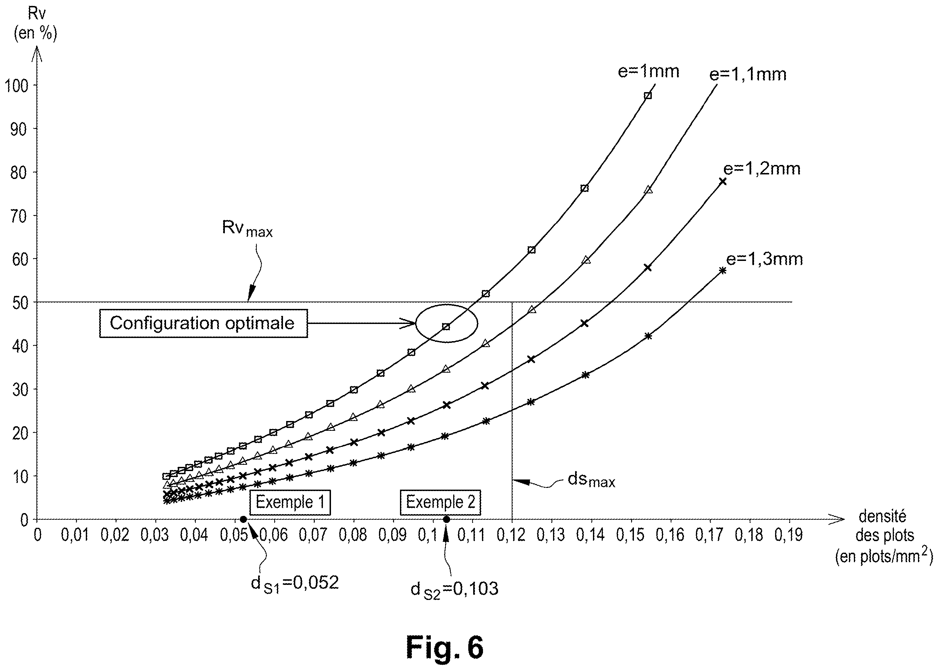

Comme représentée en détail sur les figures 4 et 5, chacune des zones de soudure 4, 5 est formée par un réseau de picots en relief 11, 21 formant des saillies au niveau de la face 32 de l'élément interne 3. Les picots 11, 21 sont disposés dans chacun des réseaux sous la forme de plusieurs lignes, à savoir quatre lignes L1 à L4 dans l'exemple représenté, parallèles à une même direction D0, les picots 11, 21 de deux lignes adjacentes étant disposés en quinconce. Bien entendu, le nombre de lignes pourra être différent de 4. De manière avantageuse, chacun des réseaux pourra comprendre entre 2 et 5 lignes de picots. Les picots 11, 21 sont répartis uniformément dans chacun des réseaux. Comme expliqué en détail dans les paragraphes suivants, notamment au regard du diagramme de la figure 6, la densité surfacique des picots dans chacun des réseaux sera avantageusement comprise entre 0,08 picot par mm² et 0,12 picot par mm², et, de préférence, comprise entre 0,10 picot par mm² et 0,11 picot par mm².

Les picots 11, 21 possèdent sensiblement la même forme, laquelle est constituée d'une base cylindrique et d'une extrémité conique. Par souci de simplification, une partie de la base cylindrique et l'extrémité conique des picots 11 ont été représentées en traits pointillés sur la figure 5. Cette représentation ne signifie toutefois pas que les picots 11 ou 21 pénètrent partiellement dans l'élément externe 2. En effet, les parties représentées en pointillées correspondent aux parties ayant fondu lors du procédé de soudage. Ces parties en pointillées se sont en fait transformées en un résidu de soudage que l'on retrouve sous la forme d'une structure filamentaire 7 entre les parties restantes, non fondues, des picots 11, 21. Ces parties restantes forment une interface de liaison entre l'élément interne 3 et l'élément externe 2. Cette interface de liaison est définie, dans le becquet 1, par un réseau de plots 12 de forme sensiblement cylindrique, correspondant aux parties restantes des picots 11, 21, ledit réseau possédant une géométrie identique, notamment en termes de densité surfacique des plots et disposition des plots dans le réseau, que celle du réseau des picots 11, 21.

Du fait de son adhérence, à la fois, sur les flancs des plots 12 et sur des portions de l'élément externe 2 qui ne sont pas directement soudées sur les plots 12, la structure filamentaire 7 participe, en combinaison avec les plots 12, à la liaison entre l'élément externe 2 et l'élément interne 3. En particulier, des tests de résistance à l'arrachement et au pelage effectués sur plusieurs variantes de becquets 1 possédant une structure similaire à celle décrite précédemment ont notamment permis de constater que le rapport Rv entre le volume occupé par la structure filamentaire 7 et le volume disponible entre les plots 12 a une influence significative sur les valeurs de résistance mesurées lors de ces tests. Ainsi, les meilleurs résultats ont été obtenus lorsque le rapport Rv était compris entre 35 % et 45 %. Dans cette plage préférentielle, la résistance à l'arrachement mesurée lors des tests peut notamment dépasser 50 daN. Comme représenté sur le diagramme de la figure 6, le rapport Rv est directement dépendant de la densité surfacique ds des plots 12 dans l'interface de liaison (qui correspond également à la densité surfacique ds' des picots 11, 21 dans les zones de soudure 4, 5 de l'élément interne 3 avant sa liaison par soudure avec l'élément externe 3) et de la hauteur e des plots 12. Comme indiqué sur ce diagramme par une ligne horizontale parallèle à l'axe des abscisses, le rapport Rv sera de préférence inférieure à une valeur maximale Rvmax égale à 50 % de manière à éviter l'apparition de défauts sur la face visible de l'élément externe 2 du fait du volume trop important occupé par la structure filamentaire 7 dans l'espace inter-plots. De façon similaire, il est indiqué par une ligne verticale parallèle à l'axe des ordonnées une valeur maximale dsmax (égale à 0,12 plot par mm²) de densité surfacique des plots 12 au-delà de laquelle il n'est plus possible de réaliser le réseau de plots 12 du fait des contraintes trop importantes imposées sur le moule destiné à former l'élément interne 3. Il est également indiqué sur ce diagramme deux valeurs spécifiques ds1 (égale à 0,052 plot par mm²) et ds2 (égale à 0,103 plot par mm²) de la densité surfacique de plots. Ces deux valeurs correspondent à deux exemples de réalisation spécifiques du becquet 1, respectivement l'exemple 1 et l'exemple 2, pour lesquels il a été utilisé un élément interne 3, conforme à celui représenté sur la figure 2, présentant des lignes de soudure 4, 5 possédant une géométrie spécifique conforme à celle représentée sur les figures 4 et 5. Les paramètres D, d1, d2, d3, d4, h, e, α1 et α2 indiqués sur ces figures correspondent respectivement à :
D : diamètre de la base cylindrique des picots ;
d1: espacement entre deux lignes adjacentes selon la direction longitudinale D0', l'espacement étant mesuré entre les droites joignant les sommets des extrémités coniques des picots desdites lignes adjacentes ;
d2 : espacement entre deux lignes adjacentes selon la direction latérale D0, l'espacement étant mesuré entre les droites joignant les sommets des extrémités coniques des picots desdites lignes adjacentes ;
d3 : espacement entre deux picots adjacents de deux lignes adjacentes, l'espacement étant mesuré entre les flancs des bases cylindriques respectives des picots ;
d4 : espacement entre deux picots adjacents d'une même ligne, l'espacement étant mesuré entre les sommets des extrémités coniques des picots ;
h : hauteur totale des picots ;
e : hauteur de la partie restante des picots une fois l'opération de soudure effectuée ;
2α1 : angle formé entre les droites joignant respectivement les sommets des extrémités coniques de deux picots adjacents d'une même ligne au sommet de l'extrémité conique du picot le plus proche d'une ligne adjacente ;
α2 : angle au sommet de l'extrémité conique des picots.

Les valeurs respectives des paramètres mentionnés ci-dessus, ainsi que les résistances à l'arrachement et au pelage mesurés, pour les exemples 1 et 2 ont été répertoriés dans le tableau 1 ci-dessous.

**[Tableau 1]**

| | EXEMPLE 1 | EXEMPLE 2 |
|---|---|---|
| D | 2,2 mm | 2,2 mm |
| d1 | 3,0 mm | 2,2 mm |
| d2 | 3,2 mm | 2,3 mm |
| d3 | 2,3 mm | 2,0 mm |
| d4 | 6,4 mm | 4,6 mm |
| h | 2,2 mm | 2,2 mm |
| e | 1,0 mm | 1,0 mm |
| α1 | 45° | 45° |
| α2 | 118° | 118° |
| Résistance à l'arrachement | 24 daN | 53 daN |
| Résistance au pelage | 5 daN | 7 daN |

Pour effectuer les mesures de résistance à l'arrachement, l'élément externe 2 a été fixé sur un support, tandis que l'élément interne 3 subissait une traction perpendiculairement à sa face 31 de manière à l'éloigner de l'élément externe 2. Cette traction s'est opérée au moyen d'outils d'extraction en forme de tige, dont une extrémité a été solidarisée aux brides 6 dépassant de ladite face 31. En ce qui concerne les mesures de résistance au pelage, elles ont été effectuées en fixant l'élément externe 2 sur un support et en soumettant l'élément interne 3 à une force dirigée vers l'extérieur de manière à l'écarter de l'élément externe 2, la force étant appliquée au niveau d'une des extrémités latérales de cet élément interne 3.

Au vu du tableau 1, on observe une nette amélioration de la résistance à l'arrachement et au pelage dans l'exemple 2 par rapport à celles de l'exemple 1. Cette amélioration s'explique par une proportion plus importante de structure filamentaire 7 dans les espaces entre les plots 12 dans le becquet de l'exemple 2 (Rv = 45 %) que dans le becquet de l'exemple 1 (Rv = 18 %). Dans l'exemple 1, la structure filamentaire 7 n'est pas suffisamment dense pour participer à l'adhérence de l'élément externe 2 sur l'élément interne 3. Au contraire, dans l'exemple 2, la structure filamentaire 7, compactée dans un espace plus restreint, permet de créer des points de liaisons supplémentaires entre l'élément externe 2 et l'élément interne 3.

Une analyse plus poussée permet de déduire une géométrie optimale pour le réseau des picots 11, 21 de l'élément interne 3 de manière à garantir que le rapport Rv soit compris entre 35 % et 45 %.

Dans cette géométrie optimale, le diamètre D de la base cylindrique des picots 11, 21 sera avantageusement compris entre 1,70 mm et 2,70 mm, et, de préférence, sera compris entre 2,10 mm et 2,30 mm, et, de préférence encore, sera égal à 2,20 mm. L'angle α2 au sommet de l'extrémité conique des picots sera avantageusement compris entre 100° et 135°, et, de préférence, sera compris entre 115° et 120°, et, de préférence encore, sera égal à 118°. Les picots seront avantageusement espacés de manière régulière dans chacune des lignes, l'écart d4 entre deux picots adjacents dans chacune des lignes étant sensiblement égal au double du diamètre D de la base cylindrique d'un picot. Les lignes seront avantageusement espacées de manière régulière selon la direction D0', l'écart d1 entre deux lignes adjacentes étant sensiblement égal au diamètre D de la base cylindrique d'un picot. Les picots possèderont avantageusement une hauteur h totale sensiblement égale au diamètre D de leur base cylindrique. Deux picots adjacents d'une des lignes définiront avantageusement, avec le picot le plus proche d'une ligne adjacente, une structure triangulaire, dans laquelle l'angle 2α1 formé entre les droites joignant respectivement les sommets des extrémités coniques desdits picots adjacents au sommet de l'extrémité conique dudit picot le plus proche sera compris entre 80° et 100°, et, de préférence, sera égal à 90°.

## Revendications

1. Pièce (3) en matière plastique mise en œuvre lors de la fabrication d'un becquet (1) ou d'une baguette de porte d'un véhicule automobile, ladite pièce (3) comprenant au moins une paroi (32) destinée à être soudée par vibration à une autre pièce (2) constitutive du becquet (1) ou de la baguette de porte, dans laquelle ladite paroi (32) est équipée d'au moins un réseau de picots (11, 21) en relief destinés à former une zone de soudure (4, 5), lesdits picots (11, 21) possédant une forme sensiblement identique, constituée d'une base cylindrique et d'une extrémité conique, ledit réseau comprenant une pluralité de lignes (L1-L4) de picots (11, 21) s'étendant selon une première direction (D0), les picots (11, 21) de deux lignes adjacentes étant disposés en quinconce, et les picots (11, 21) étant répartis uniformément dans le réseau, **caractérisée en ce que** la densité surfacique (ds') des picots (11, 21) dans le réseau est comprise entre 0,08 picots/mm² et 0,12 picots/mm², et, de préférence, comprise entre 0,10 picots/mm² et 0,11 picots/mm².

2. Pièce (3) selon la revendication 1, **caractérisée en ce que** les picots (11, 21) sont espacés de manière régulière dans chacune des lignes (L1-L4), l'écart (d4) entre deux picots (11, 21) adjacents dans chacune des lignes (L1-L4) étant sensiblement égal au double du diamètre (D) de la base cylindrique d'un picot (11, 21), l'écart (d4) étant mesuré entre les sommets des extrémités coniques desdits picots adjacents.

3. Pièce (3) selon la revendication 1 ou 2, **caractérisée en ce que** les lignes (L1-L4) sont espacées de manière régulière selon une deuxième direction (D0') perpendiculaire à la première direction (D0), l'écart (d1) entre deux lignes adjacentes étant sensiblement égal au diamètre (D) de la base cylindrique d'un picot (11, 21), l'écart (d1) étant mesuré entre les droites joignant les sommets des extrémités coniques des picots desdites lignes adjacentes.

4. Pièce (3) selon l'une des revendications précédentes, **caractérisée en ce que** les picots (11, 21) possèdent une hauteur (h) totale sensiblement égale au diamètre (D) de leur base cylindrique.

5. Pièce (3) selon l'une des revendications précédentes, **caractérisée en ce que** deux picots (11, 21) adjacents d'une des lignes (L1-L4) définissent, avec le picot (11, 21) le plus proche d'une ligne adjacente, une structure triangulaire, dans laquelle l'angle (2α1) formé entre les droites joignant respectivement les sommets des extrémités coniques desdits picots adjacents au sommet de l'extrémité conique dudit picot le plus proche est compris entre 80° et 100°, et, de préférence, est égal à 90°.

6. Pièce (3) selon l'une des revendications précédentes, **caractérisée en ce que** l'angle (α2) au sommet de l'extrémité conique des picots (11, 21) est compris entre 100° et 135°, et, de préférence, est compris entre 115° et 120°, et, de préférence encore, est égal à 118°.

7. Pièce (3) selon l'une des revendications précédentes, **caractérisée en ce que** le diamètre (D) de la base cylindrique des picots (11, 21) est compris entre 1,70 mm et 2,70 mm, et, de préférence, est compris entre 2,10 mm et 2,30 mm, et, de préférence encore, est égal à 2,20 mm.

8. Pièce (3) selon l'une des revendications précédentes, **caractérisée en ce que** le réseau comprend entre 2 et 5 lignes (L1-L4) de picots (11, 21).

9. Becquet (1) ou baguette de porte de véhicule automobile formé par l'assemblage d'une première pièce (3) en matière plastique conforme à l'une des revendications précédentes et d'une deuxième pièce (2) en matière plastique, l'assemblage étant réalisé par un procédé de soudage par vibration, ledit becquet (1) ou ladite baguette de porte comprenant au moins une interface de liaison entre la première pièce (3) et la deuxième pièce (2), **caractérisé en ce que** l'interface de liaison est formée d'un réseau de plots (12) de forme sensiblement cylindrique, ledit réseau comprenant une pluralité de lignes de plots (12) s'étendant selon une première direction (D0), les plots (12) de deux lignes adjacentes étant disposés en quinconce, **en ce que** les plots (12) sont répartis uniformément dans le réseau, la densité surfacique (ds) des plots (12) dans le réseau étant comprise entre 0,08 plot/mm² et 0,12 plot/mm², et, de préférence, comprise entre 0,10 plot/mm² et 0,11 plot/mm², et **en ce que** les plots (12) possèdent une hauteur (e), telle que mesurée dans une direction parallèle à l'axe des plots, comprise entre 0,85 mm et 1,15 mm, et, de préférence, comprise entre 0,9 mm et 1,10 mm, et, de préférence encore, égale à 1,0 mm.

10. Becquet (1) ou baguette de porte selon la revendication 9, **caractérisé en ce que** le volume séparant les plots contient une structure filamentaire (7) formée lors du procédé de soudage par vibration, le rapport (Rv) entre le volume occupé par la structure filamentaire (7) et le volume total disponible entre les plots (12) est compris entre 0,35 et 0,45.

11. Becquet (1) ou baguette de porte selon la revendication 9 ou 10, **caractérisé en ce que** les plots (12) sont espacés de manière régulière dans chacune des lignes, l'écart (d4) entre deux plots adjacents dans chacune des lignes étant sensiblement égal au double du diamètre (D) d'un plot (12), l'écart (d4) étant mesuré entre les axes desdits plots adjacents.

12. Becquet (1) ou baguette de porte selon l'une des revendications 9 à 11, **caractérisé en ce que** les lignes sont espacées de manière régulière selon une deuxième direction (D0') perpendiculaire à la première direction (D0), l'écart (d1) entre deux lignes adjacentes étant sensiblement égal au diamètre (D) d'un plot (12), l'écart (d1) étant mesuré entre les droites joignant les axes des plots desdites lignes adjacentes.

13. Becquet (1) ou baguette de porte selon l'une des revendications 9 à 12, **caractérisé en ce que** deux plots (12) adjacents d'une des lignes définissent, avec le plot (12) le plus proche d'une ligne adjacente, une structure triangulaire, dans laquelle l'angle (2α1) formé entre les droites joignant respectivement les axes desdits plots adjacents à l'axe dudit plot le plus proche est compris entre 80° et 100°, et, de préférence, est égal à 90°.

14. Becquet (1) ou baguette de porte selon l'une des revendications 9 à 13, **caractérisé en ce que** le diamètre (D) des plots (12) est compris entre 1,70 mm et 2,70 mm, et, de préférence, est compris entre 2,10 mm et 2,30 mm, et, de préférence encore, est égal à 2,20 mm.

15. Becquet (1) ou baguette de porte selon l'une des revendications 9 à 14, **caractérisé en ce que** le réseau comprend entre 2 et 5 lignes de plots (12).

16. Becquet (1) ou baguette de porte selon l'une des revendications 9 à 15, **caractérisé en ce que** la première pièce (3) forme un élément de structure interne et la deuxième pièce (2) forme un élément de structure externe destiné à être visible depuis l'extérieur du véhicule automobile.

17. Becquet (1) ou baguette de porte selon l'une des revendications 9 à 16, **caractérisé en ce que** la première pièce (3) et la deuxième pièce (2) sont constitués d'un matériau du type polypropylène contenant entre 20 % et 30 % de charges minérales.

18. Procédé de fabrication d'un becquet (1) ou d'une baguette de porte d'un véhicule automobile, comprenant les étapes suivantes :
- Fourniture d'une première pièce (3) en matière plastique ;
- Fourniture d'une deuxième pièce (2) en matière plastique ;
- Mise en contact des première et deuxième pièces (2, 3) au niveau d'une ou plusieurs zones de soudure (4, 5) définies par un ou plusieurs réseaux de picots (11, 21) en relief de la première pièce (3) ;
- Déplacement relatif de la première pièce (3) par rapport à la deuxième pièce (2), tout en maintenant lesdites pièces (2, 3) sous pression ;
**caractérisé en ce que** la première pièce (3) en matière plastique est une pièce selon l'une des revendications 1 à 8.

## Patentansprüche

1. Teil (3) aus Kunststoff, das bei der Herstellung eines Spoilers (1) oder einer Türleiste eines Kraftfahrzeugs verwendet wird, wobei das Teil (3) mindestens eine Wand (32) umfasst, die dazu bestimmt ist, mit einem anderen Teil (2), das den Spoiler (1) oder die Türleiste bildet, durch Vibration verschweißt zu werden, wobei die Wand (32) mit mindestens einem Netz von erhabenen Stiften (11, 21) ausgestattet ist, die dazu bestimmt sind, einen Schweißbereich (4, 5) zu bilden, wobei die Stifte (11, 21) eine im Wesentlichen identische Form aufweisen, die aus einer zylindrischen Basis und einem konischen Ende besteht, wobei das Netz eine Vielzahl von Reihen (L1-L4) von Stiften (11, 21) umfasst, die sich in einer ersten Richtung (DO) erstrecken, wobei die Stifte (11, 21) zwei benachbarter Reihen versetzt angeordnet sind und die Stifte (11, 21) gleichmäßig im Netz verteilt sind, **dadurch gekennzeichnet, dass** die Flächendichte (ds') der Stifte (11, 21) im Netz zwischen 0,08 Stifte/mm² und 0,12 Stifte/mm² und vorzugsweise zwischen 0,10 Stifte/mm² und 0,11 Stifte/mm² liegt.

2. Teil (3) nach Anspruch 1, **dadurch gekennzeichnet, dass** die Stifte (11, 21) in jeder der Reihen (L1-L4) gleichmäßig beabstandet sind, wobei der Abstand (d4) zwischen zwei benachbarten Stiften (11, 21) in jeder der Reihen (L1-L4) im Wesentlichen gleich dem Doppelten des Durchmessers (D) der zylindrischen Basis eines Stifts (11, 21) ist, wobei der Abstand (d4) zwischen den Spitzen der konischen Enden der benachbarten Stifte gemessen wird.

3. Teil (3) nach Anspruch 1 oder 2, **dadurch gekennzeichnet, dass** die Reihen (L1-L4) gleichmäßig in einer zweiten Richtung (D0') senkrecht zur ersten Richtung (D0) beabstandet sind, wobei der Abstand (d1) zwischen zwei benachbarten Reihen im Wesentlichen gleich dem Durchmesser (D) der zylindrischen Basis eines Stifts (11, 21) ist, wobei der Abstand (d1) zwischen den Geraden gemessen wird, die die Spitzen der konischen Enden der Stifte der benachbarten Reihen verbinden.

4. Teil (3) nach einem der vorhergehenden Ansprüche, **dadurch gekennzeichnet, dass** die Stifte (11, 21) eine Gesamthöhe (h) aufweisen, die im Wesentlichen gleich dem Durchmesser (D) ihrer zylindrischen Basis ist.

5. Teil (3) nach einem der vorhergehenden Ansprüche, **dadurch gekennzeichnet, dass** zwei benachbarte Stifte (11, 21) einer der Reihen (L1-L4) mit dem am nächsten liegenden Stift (11, 21) einer benachbarten Reihe eine Dreiecksstruktur definieren, wobei der Winkel (2α1), der zwischen den Geraden gebildet wird, die die Spitzen der konischen Enden der benachbarten Stifte jeweils mit der Spitze des konischen Endes des am nächsten liegenden Stifts verbinden, zwischen 80° und 100° beträgt und vorzugsweise gleich 90° ist.

6. Teil (3) nach einem der vorhergehenden Ansprüche, **dadurch gekennzeichnet, dass** der Winkel (α2) an der Spitze des konischen Endes der Stifte (11, 21) zwischen 100° und 135° beträgt und vorzugsweise zwischen 115° und 120° beträgt und noch bevorzugter gleich 118° ist.

7. Teil (3) nach einem der vorhergehenden Ansprüche, **dadurch gekennzeichnet, dass** der Durchmesser (D) der zylindrischen Basis der Stifte (11, 21) zwischen 1,70 mm und 2,70 mm beträgt und vorzugsweise zwischen 2,10 mm und 2,30 mm beträgt und noch bevorzugter gleich 2,20 mm ist.

8. Teil (3) nach einem der vorhergehenden Ansprüche, **dadurch gekennzeichnet, dass** das Netz zwischen 2 und 5 Reihen (L1-L4) von Stiften (11, 21) umfasst.

9. Spoiler (1) oder Türleiste eines Kraftfahrzeugs, gebildet durch die Verbindung eines ersten Teils (3) aus Kunststoff nach einem der vorhergehenden Ansprüche und eines zweiten Teils (2) aus Kunststoff, wobei die Verbindung durch ein Vibrationsschweißverfahren erfolgt, wobei der Spoiler (1) oder die Türleiste mindestens eine Verbindungsschnittstelle zwischen dem ersten Teil (3) aus Kunststoff und dem zweiten Teil (2) aus Kunststoff umfasst, **dadurch gekennzeichnet, dass** die Verbindungsschnittstelle aus einem im Wesentlichen zylindrisch geformten Netz von Kontaktflächen (12) gebildet wird, wobei das Netz eine Vielzahl von Reihen von Kontaktflächen (12) umfasst, die sich in einer ersten Richtung (D0) erstrecken, wobei die Kontaktflächen (12) zweier benachbarter Reihen versetzt angeordnet sind, dass die Kontaktflächen (12) gleichmäßig im Netz verteilt sind, wobei die Flächendichte (ds) der Kontaktflächen (12) im Netz zwischen 0,08 Kontaktfläche/mm² und 0,12 Kontaktfläche/mm² und vorzugsweise zwischen 0,10 Kontaktfläche/mm² und 0,11 Kontaktfläche/mm² beträgt, und dass die Kontaktflächen (12) eine Höhe (e) aufweisen, die in einer Richtung parallel zur Achse gemessen wird und zwischen 0,85 mm und 1,15 mm und vorzugsweise zwischen 0,9 mm und 1,10 mm beträgt und noch bevorzugter gleich 1,0 mm ist.

10. Spoiler (1) oder Türleiste nach Anspruch 9, **dadurch gekennzeichnet, dass** das die Kontaktflächen trennende Volumen eine beim Vibrationsschweißverfahren gebildete Filamentstruktur (7) enthält und das Verhältnis (Rv) zwischen dem von der Filamentstruktur (7) eingenommenen Volumen und dem zwischen den Kontaktflächen (12) verfügbaren Gesamtvolumen zwischen 0,35 und 0,45 beträgt.

11. Spoiler (1) oder Türleiste nach Anspruch 9 oder 10, **dadurch gekennzeichnet, dass** die Kontaktflächen (12) in jeder der Reihen gleichmäßig beabstandet sind, wobei der Abstand (d4) zwischen zwei benachbarten Kontaktflächen in jeder der Reihen im Wesentlichen gleich dem Doppelten des Durchmessers (D) einer Kontaktfläche (12) ist, wobei der Abstand (d4) zwischen den Achsen der benachbarten Kontaktflächen gemessen wird.

12. Spoiler (1) oder Türleiste nach einem der Ansprüche 9 bis 11, **dadurch gekennzeichnet, dass** die Reihen gleichmäßig in einer zweiten Richtung (D0') senkrecht zur ersten Richtung (D0) beabstandet sind, wobei der Abstand (d1) zwischen zwei benachbarten Reihen im Wesentlichen gleich dem Durchmesser (D) einer Kontaktfläche (12) ist, wobei der Abstand (d1) zwischen den Geraden gemessen wird, die die Achsen der Kontaktflächen der benachbarten Reihen verbinden.

13. Spoiler (1) oder Türleiste nach einem der Ansprüche 9 bis 12, **dadurch gekennzeichnet, dass** zwei benachbarte Kontaktflächen (12) einer der Reihen mit der am nächsten liegenden Kontaktfläche (12) einer benachbarten Reihe eine Dreiecksstruktur definieren, wobei der Winkel (2α1), der zwischen den Geraden gebildet wird, die jeweils die Achsen der benachbarten Kontaktflächen mit der Achse der am nächsten liegenden Kontaktfläche verbinden, zwischen 80° und 100° beträgt und vorzugsweise gleich 90° ist.

14. Spoiler (1) oder Türleiste nach einem der Ansprüche 9 bis 13, **dadurch gekennzeichnet, dass** der Durchmesser (D) der Kontaktflächen (12) zwischen 1,70 mm und 2,70 mm und vorzugsweise zwischen 2,10 mm und 2,30 mm beträgt und noch bevorzugter gleich 2,20 mm ist.

15. Spoiler (1) oder Türleiste nach einem der Ansprüche 9 bis 14, **dadurch gekennzeichnet, dass** das Netz zwischen 2 und 5 Reihen von Kontaktflächen (12) umfasst.

16. Spoiler (1) oder Türleiste nach einem der Ansprüche 9 bis 15, **dadurch gekennzeichnet, dass** das erste Teil (3) ein inneres Strukturelement bildet und das zweite Teil (2) ein äußeres Strukturelement bildet, das dazu bestimmt ist, von der Außenseite des Kraftfahrzeugs aus sichtbar zu sein.

17. Spoiler (1) oder Türleiste nach einem der Ansprüche 9 bis 16, **dadurch gekennzeichnet, dass** das erste Teil (3) und das zweite Teil (2) aus einem Material des Typs Polypropylen bestehen, das zwischen 20 % und 30 % mineralische Füllstoffe enthält.

18. Verfahren zum Herstellen eines Spoilers (1) oder einer Türleiste eines Kraftfahrzeugs, umfassend die folgenden Schritte:
- Bereitstellen eines ersten Teils (3) aus Kunststoff;
- Bereitstellen eines zweiten Teils (2) aus Kunststoff;
- Inkontaktbringen des ersten und des zweiten Teils (2, 3) auf Höhe eines oder mehrerer Schweißbereiche (4, 5), die durch ein oder mehrere Netze von erhabenen Stiften (11, 21) des ersten Teils (3) definiert sind;
- relatives Verschieben des ersten Teils (3) in Bezug auf das zweite Teil (2), während die Teile (2, 3) unter Druck gehalten werden;
**dadurch gekennzeichnet, dass** das erste Teil (3) aus Kunststoff ein Teil nach einem der Ansprüche 1 bis 8 ist.

## Claims

1. A part (3) made of plastic material used during the manufacture of a spoiler (1) or a door strip of a motor vehicle, said part (3) comprising at least one wall (32) intended to be welded by vibration to another part (2) constituting the spoiler (1) or the door strip, in which said wall (32) is equipped with at least one network of raised pins (11, 21) intended to form a welding zone (4, 5), said pins (11, 21) having a substantially identical shape, consisting of a cylindrical base and a conical end, said network comprising a plurality of lines (L1-L4) of pins (11, 21) extending in a first direction (D0), the pins (11, 21) of two adjacent lines being arranged in a staggered pattern, and the pins (11, 21) being distributed uniformly in the network, **characterized in that** the surface density (ds') of the pins (11, 21) in the network is comprised between 0.08 pins/mm² and 0.12 pins/mm², and preferably comprised between 0.10 pins/mm² and 0.11 pins/mm².

2. The part (3) according to claim 1, **characterized in that** the pins (11, 21) are spaced regularly in each of the lines (L1-L4), the distance (d4) between two adjacent pins (11, 21) in each of the lines (L1-L4) being substantially equal to twice the diameter (D) of the cylindrical base of a pin (11, 21), the distance (d4) being measured between the apexes of the conical ends of said adjacent pins.

3. The part (3) according to claim 1 or 2, **characterized in that** the lines (L1-L4) are spaced regularly in a second direction (D0') perpendicular to the first direction (D0), the distance (d1) between two adjacent lines being substantially equal to the diameter (D) of the cylindrical base of a pin (11, 21), the distance (d1) being measured between the straight lines joining the apexes of the conical ends of the pins of said adjacent lines.

4. The part (3) according to any of the preceding claims, **characterized in that** the pins (11, 21) have a total height (h) substantially equal to the diameter (D) of their cylindrical base.

5. The part (3) according to any of the preceding claims, **characterized in that** two adjacent pins (11, 21) of one of the lines (L1-L4) define, with the pin (11, 21) closest to an adjacent line, a triangular structure, in which the angle (2α1) formed between the straight lines respectively joining the apexes of the conical ends of said adjacent pins to the apex of the conical end of said closest pin is comprised between 80° and 100°, and preferably is equal to 90°.

6. The part (3) according to any of the preceding claims, **characterized in that** the angle (α2) at the apex of the conical end of the pins (11, 21) is comprised between 100° and 135°, and preferably is comprised between 115° and 120°, and more preferably is equal to 118°.

7. The part (3) according to any of the preceding claims, **characterized in that** the diameter (D) of the cylindrical base of the pins (11, 21) is comprised between 1.70 mm and 2.70 mm, and preferably is comprised between 2.10 mm and 2.30 mm, and more preferably is equal to 2.20 mm.

8. The part (3) according to any of the preceding claims, **characterized in that** the network comprises between 2 and 5 lines (L1-L4) of pins (11, 21).

9. A spoiler (1) or door strip for a motor vehicle formed by assembling a first part (3) made of plastic material in accordance with any of the preceding claims and a second part (2) made of plastic material, the assembly being carried out by a vibration welding method, said spoiler (1) or said door strip comprising at least one connecting interface between the first part (3) and the second part (2), **characterized in that** the connecting interface is formed by a network of studs (12) of substantially cylindrical shape, said network comprising a plurality of lines of studs (12) extending in a first direction (D0), the studs (12) of two adjacent lines being arranged in a staggered pattern, **in that** the studs (12) are distributed uniformly in the network, the surface density (ds) of the studs (12) in the network being comprised between 0.08 stud/mm² and 0.12 stud/mm², and, preferably, comprised between 0.10 plot/mm² and 0.11 plot/mm², and **in that** the plots (12) have a height (e), as measured in a direction parallel to the axis of the plots, comprised between 0.85 mm and 1.15 mm, and preferably comprised between 0.9 mm and 1.10 mm, and more preferably equal to 1.0 mm.

10. The spoiler (1) or door strip according to claim 9, **characterized in that** the volume separating the studs contains a filamentary structure (7) formed during the vibration welding method, the ratio (Rv) between the volume occupied by the filamentary structure (7) and the total volume available between the studs (12) is comprised between 0.35 and 0.45.

11. The spoiler (1) or door strip according to claim 9 or 10, **characterized in that** the studs (12) are spaced regularly in each of the lines, the distance (d4) between two adjacent studs in each of the lines being substantially equal to twice the diameter (D) of a stud (12), the distance (d4) being measured between the axes of said adjacent studs.

12. The spoiler (1) or door strip according to any of claims 9 to 11, **characterized in that** the lines are spaced regularly in a second direction (D0') perpendicular to the first direction (D0), the distance (d1) between two adjacent lines being substantially equal to the diameter (D) of a stud (12), the distance (d1) being measured between the straight lines joining the axes of the studs of said adjacent lines.

13. The spoiler (1) or door strip according to any of claims 9 to 12, **characterized in that** two adjacent studs (12) of one of the lines define, with the stud (12) closest to an adjacent line, a triangular structure, in which the angle (2α1) formed between the straight lines respectively joining the axes of said adjacent studs to the axis of said closest stud is comprised between 80° and 100°, and preferably is equal to 90°.

14. The spoiler (1) or door strip according to any of claims 9 to 13, **characterized in that** the diameter (D) of the studs (12) is comprised between 1.70 mm and 2.70 mm, and preferably is comprised between 2.10 mm and 2.30 mm, and more preferably is equal to 2.20 mm.

15. The spoiler (1) or door strip according to any of claims 9 to 14, **characterized in that** the network comprises between 2 and 5 lines of studs (12).

16. The spoiler (1) or door strip according to any of claims 9 to 15, **characterized in that** the first part (3) forms an internal structural element and the second part (2) forms an external structural element intended to be visible from the outside of the motor vehicle.

17. The spoiler (1) or door strip according to any of claims 9 to 16, **characterized in that** the first part (3) and the second part (2) are made of a polypropylene-type material containing between 20% and 30% mineral fillers.

18. A method for manufacturing a spoiler (1) or a door strip of a motor vehicle, comprising the following steps:
- Providing a first part (3) made of plastic material;
- Providing a second part (2) made of plastic material;
- Bringing the first and second parts (2, 3) into contact at one or more welding zones (4, 5) defined by one or more networks of raised pins (11, 21) of the first part (3);
- Relative displacing the first part (3) relative to the second part (2), while maintaining said parts (2, 3) under pressure;
**characterized in that** the first part (3) made of plastic material is a part according to any of claims 1 to 8.
